Europäisches Patentamt

European Patent Office

Office européen des brevets

(11) Publication number: **0 321 280**
**A2**

# EUROPEAN PATENT APPLICATION

(21) Application number: **88311940.6**

(51) Int. Cl.4: **F 16 J 15/16**

(22) Date of filing: **16.12.88**

(30) Priority: **18.12.87 JP 192025/87**
**06.05.88 JP 59909/88**

(43) Date of publication of application:
**21.06.89 Bulletin 89/25**

(84) Designated Contracting States: **DE FR GB**

(71) Applicant: **NOK CORPORATION**
**12-15, Shiba-daimon 1-chome Minato-ku**
**Tokyo 105 (JP)**

**TOYOTA JIDOSHA KABUSHIKI KAISHA**
**1-banchi, Toyota-cho Toyota-shi**
**Aichi-ken (JP)**

(72) Inventor: **Sowa, Mitsuhiro**
**c/o 4-3-1 Tsujidoshinmachi**
**Fujisawa-shi Kanagawa-ken (JP)**

**Tabata, Masaaki**
**c/o 1-banchi Toyota-cho**
**Toyota-shi Aichi-ken (JP)**

(74) Representative: **Jenkins, Peter David et al**
**Page White & Farrer 5 Plough Place New Fetter Lane**
**London EC4A 1HY (GB)**

(54) Sealing assembly.

(57) A sealing assembly is used to seal the gap between the two member that move relative to each other. It includes first and second rings provided in a groove formed in one of the members. A portion of the outer peripheral surface of the first ring is in contact with the other member. None of the surfaces of the second ring makes contact with the other member. The second ring engages with the portion of the first ring which is not in contact with the other member. The second ring has a coefficient of thermal expansion smaller than that of the first ring. When the first ring expands due to the heat generated by the slide of the first ring against the other member, the expansion of the first ring is limited by the second ring.

F I G. 1

## Description

## SEALING ASSEMBLY

The present invention relates to a sealing assembly, and, more particularly, to a sealing assembly which is provided between two members that move relative to each other, and which exhibits excellent sliding and sealing characteristics when high pressure acts thereon.

Description of the Related Art:

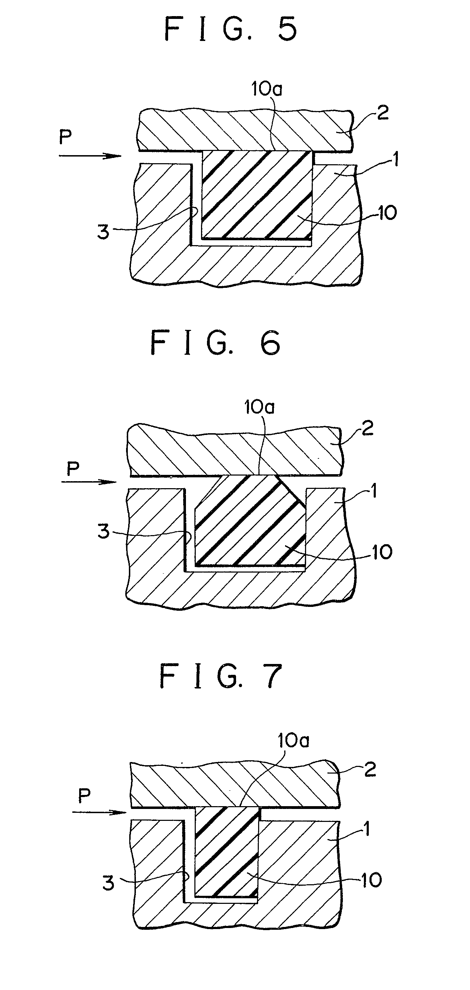

Figs. 5 to 7 show conventional seal rings for providing a high pressure seal at the gap between two members that move relative to each other, e.g., a piston and a cylinder.

A seal ring 10 shown in Fig. 5 is provided in a groove 3 formed in a piston between the piston 1 and a cylinder 2 that move relative to each other. The seal ring 10 is made of a synthetic resin, is annular, has a rectangular cross-section, and has a broad sealing surface 10a.

The broad sealing surface 10a allows the seal ring 10 to exhibit excellent sealing characteristics. The seal ring 10 suffers, however, from the disadvantage that the resistance to sliding of the piston 1 when it moves reciprocatively within the cylinder 2 is large, so use of this type of seal ring 10 is unpractical.

Figs. 6 and 7 show improved seal rings 10 which have a narrower sealing surface 10a than that of the seal ring 10 shown in Fig. 5 and which thus offer reduced resistance resistance to sliding.

This reduction in the width of the sealing surface 10a of the seal ring 10 shown in Fig. 6 is achieved by cutting off the two end portions thereof. This results in the seal ring 10 having a tapered sealing surface 10a. In the seal ring 10 shown in Fig. 7, the entire width of the seal ring 10 is reduced relative to that of the seal ring 10 shown in Fig. 5 so that the width of the sealing surface 10a thereof is also reduced.

The resistance to sliding encounted in the seal rings 10 shown in Figs. 6 and 7 is less than that of the case of the seal ring 10 shown in Fig. 5. However, the seal rings 10 shown in Figs. 6 and 7 suffer from the problem that, when a pressure P acts on the piston 1 and the cylinder 2, part of the seal ring 10 is forced out into a gap formed between the piston 1 and the cylinder 2 on the side remote from where the pressure P is acting, thus precluding effective sealing of the gap.

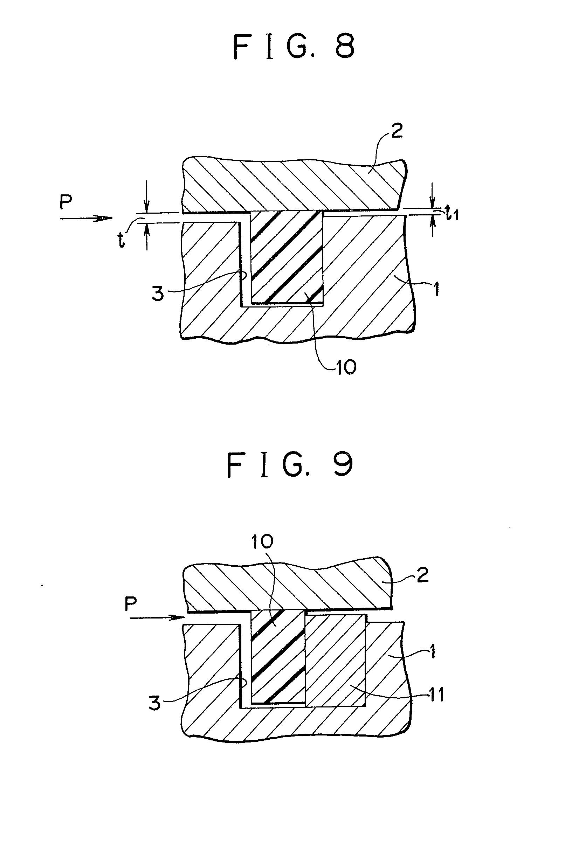

Figs. 8 and 9 illustrate techniques that have been proposed to provide a seal ring 10 which exhibits excellent sealing characteristics.

In the seal ring shown in Fig. 8, a gap t between the cylinder 2 and the piston 1 on the side of the groove 3 formed in the piston 1 on which pressure P acts is made smaller than a gap t1 formed on the opposite side.

In consequence, a smaller part of the seal ring 10 which is provided in the groove 3 protrudes into the gap t1 between the cylinder 2 and the piston 1 when pressure P acts thereon, and such a seal ring therefore exhibits excellent sealing characteristics.

The technique shown in Fig. 9 employs a backup ring 11 made of metal, as well as a seal ring 10. The backup ring 11 is located in the groove 3 on the side of the seal ring 10 which is remote from where pressure P acts, and has the function of preventing a large degree of deformation of the seal ring 10. This also results in an improvement in sealing efficiency.

However, in the techniques shown in Figs. 8 and 9, sliding of the seal ring 10 generates heat, which acts to expand the seal ring 10, and this expansion of the seal ring increases the resistance to sliding.

Accordingly, an object of the present invention is to provide a sealing assembly which exhibits excellent sealing characteristics and in which less resistance to sliding is encountered during the sealing.

Another object of the present invention is to provide a sealing assembly in which less resistance to sliding is encountered when pressure acts thereon, and which allows a quantity of part of the sealing assembly which protrudes during the sealing to be reduced so as to prevent excessive degree of deformation of the sealing assembly.

Still another object of the present invention is to provide a sealing assembly which does not expand to a large extent by the heat generated by the slide thereof when pressure acts thereon and thereby maintains the resistance to sliding to a small value, and which allows a quantity of part of sealing assmelby which protrudes to be reduced so as to improve the sealing efficiency.

To this end, the present invention provides a sealing assembly provided within a groove formed in one of members that move relative to each other for the purpose of sealing a gap formed between the two member in resistance to pressure acting on the gap, which comprises a first ring having an outer peripheral surface that makes contact with the other member, and a second ring engaging with the first ring, the second ring having a coefficient of thermal expansion smaller than that of the first ring, non of the surfaces of the second ring being in contact with the other member.

These and other objects, features and advantages of the invention will become clear from the following description of the preferred embodiments when the same is read in conjunction with the accompanying drawings.

Fig. 1 is a cross-sectional view of a sealing assembly, showing a first embodiment of the present invention;

Fig. 2 is a cross-sectional view of a sealing assembly, showing a second embodiment of the present invention;

Fig. 3 is a cross-sectional view of a sealing assembly, showing a third embodiment of the present invention;

Fig. 4 is a graph showing the relationship between the pressure and resistance to sliding of a sealing assembly according to the present invention and those of a conventional sealing device;

Figs. 5 to 7 are respectively cross-sectional views of conventional sealing devices;

Figs. 8 and 9 are cross-sectional views showing techniques proposed to provide a seal ring which exhibits excellent sealing characteristics.

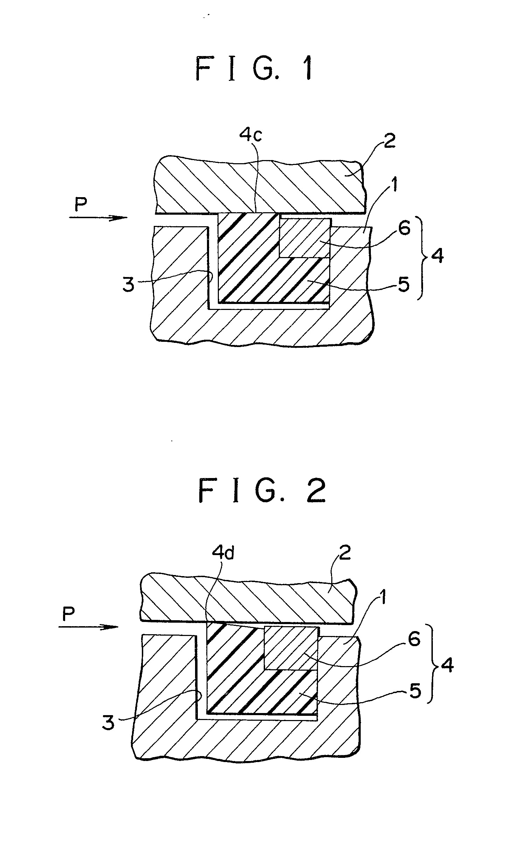

Fig. 1 shows a sealing assembly of a first embodiment according to the present invention.

Between a piston 1 and a cylinder that move relative to each other, a sealing assembly 4 is provided in a groove 3 formed in the surface of the piston 1 that faces the cylinder 2.

The sealing assembly 4 includes a first ring 5 having a L-shaped cross-section, the outer peripheral surface of a large diameter portion of the first ring 5 forming a sealing surface 4c which makes contact with the cylinder 2, the first ring 5 being made of a synthetic resin such as Teflon, and a second ring 6 which engages with the outer peripheral surface of a small diameter portion of first ring 5, the second ring 6 having no surface which makes contact with the cylinder 2.

The entire form of a combination of the first and second rings 5 and 6 is substantially rectangular.

In this sealing assembly 4, when pressure P acts thereon from the leftward direction as viewed in Fig. 1, it can be cut off by the sealing surface 4c of the first ring 5 which is in contact with the cylinder 2, even when the pressure applied is high.

Further, the expansion of the first ring 5 which is caused by the heat generated during the sliding is limited by the provision of the second ring 6 which is made of a metal having a relatively small coefficient of thermal expansion than that of the first ring 5 made of a synthetic resin and which engages with the outer peripheral surface of the small diameter portion of the first ring 5, thereby limiting an increase in the resistance to sliding of the sealing surface 4c of the first ring 5.

In consequence, the sealing assembly 4 exhibits excellent sealing characteristics when a high pressure is applied thereto. Further, the resistance to sliding of the sealing assembly can be maintained to a small value.

Fig. 2 shows a second embodiment of a sealing assembly according to the present invention.

This sealing assembly 4 is provided in the groove 3 formed in the piston 1, and includes a first ring 5 having an L-shaped cross-section and made of a synthetic resin such as Teflon, and a second ring 6 made of a metal, the second ring 6 engaging with a small diameter portion of the first ring 5. The outer peripheral surface of a large diameter portion of the first ring 5 has a tapered form with the side thereof on which the pressure P acts serving as a vertex 4d. The vertex 4d is in contact with the cylinder 2, but the second ring 6 is not in contact with the cylinder 2. The second ring 6 has a coefficient of thermal expansion smaller than that of the first ring 5.

In this sealing assembly 4, since only the vertex 4d of the first ring 5 is in contact with the cylinder 2, the resistance to sliding can be maintained to a small value even when the pressure P becomes high. Further, since the thermal expansion of the first ring 5 can be limited, an increase in the resistance to sliding can also be limited.

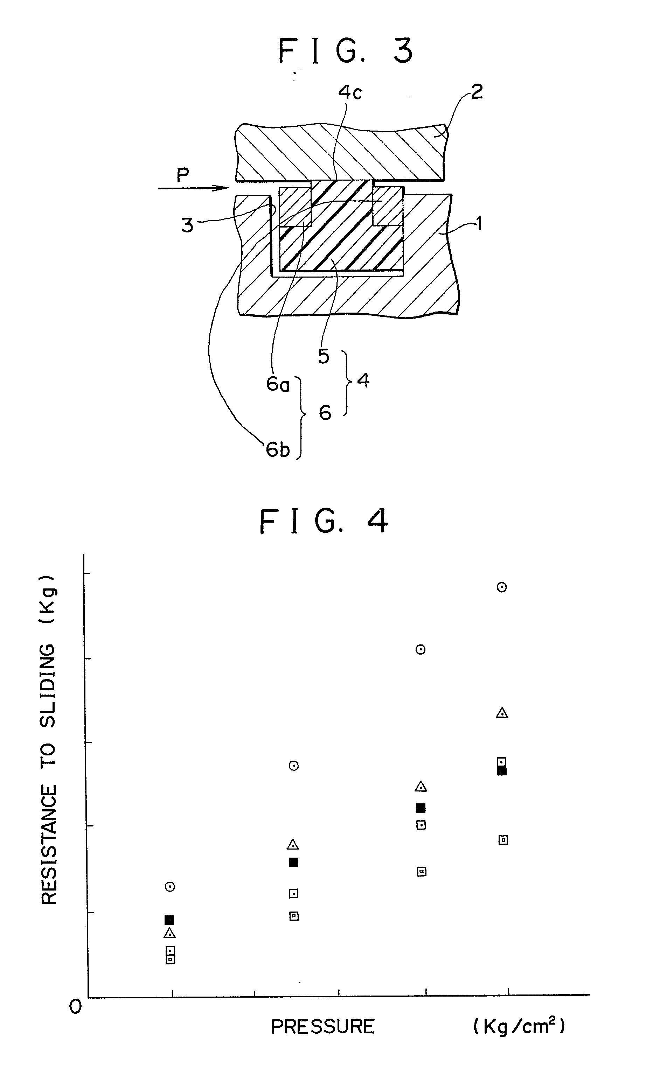

Fig. 3 shows a sealing assembly of a third embodiment according to the present invention.

This sealing assembly 4 is provided in the groove 3 formed in the piston 1, and includes a first ring 5 made of a synthetic resin such as Teflon, the first ring 5 having a large diameter portion at the center and small diameter portions at both sides of the central large diameter portion, and a second ring 6 which consists of two rings 6a and 6b. The two rings 6a and 6b are made of a metal, and engage with the two small diameter portions of the first ring 5, respectively. The outer peripheral surface of the large diameter portion of the first ring 5 forms a sealing surface 4c which makes contact with the cylinder 2. None of the surfaces of the second ring 6 is in contact with the cylinder 2.

In this sealing assembly 4, when pressure P acts thereon from the leftward direction as viewed in Fig. 3, it can be cut off by the sealing surface 4c of the first ring 5. Further, since the thermal expansion of the first ring 5 is limited by the second ring 6 consisting of the metal rings 6a and 6b from both sides of the first ring 5, the resistance to sliding can be maintained to a small value.

Further, since the sealing surface 4c is large enough to cut off the pressure, the sealing assembly 4 exhibits excellent sealing characteristics when high pressure acts thereon, and the resistance to sliding becomes stable.

Fig. 4 is a graph showing the relationship between the pressure and the resistance to sliding obtained in the sealing assembly according to the present invention and those of conventional sealing devices.

In the graph, ⊡ represents the relationship between the pressure and the resistance obtained by the first embodiment of the present invention shown in Fig. 1, ■ represents those of the second embodiment of the present invention shown in Fig. 1, ⊠ represents those of the third embodiment of the present invention, ⊚ represents those of the conventional sealing device shown in Fig. 5, and △ indicates those of the conventional device shown in Fig. 6.

As is clear from the graph in Fig. 4, in the conventional seal ring shown in Fig. 5, even when the pressure applied thereto is low, the resistance to sliding is large. As the pressure increases, the resistance to sliding further inreases. In the conventional seal ring shown in Fig. 6, while the pressure applied thereto is low, the resistance to sliding remains small. However, as the pressure increases, the resistance also rapidly increases.

On the other hand, in the sealing assemblies of the first, second and third embodiments according to the present invention, even when the pressure increases, the resistance to sliding does not increase at the same rate, and excellent sliding characteristics is ensured.

**Claims**

1. A sealing assembly provided in a groove

FIG. 1

FIG. 2

# FIG. 3

# FIG. 4

# F I G. 5

# F I G. 6

# F I G. 7

# FIG. 8

# FIG. 9